# EUROPEAN PATENT APPLICATION

(11) **EP 3 871 492 A2**
(43) Date of publication of application: **01.09.2021**
(21) Application number: 21159398.3
(22) Date of filing: 25.02.2021
(51) Int. Cl.: A01G 9/18, A01G 9/24, A01G 31/06

(54) **COMBINED PLANT GROW RACK AND VENTILATION SYSTEM AND METHOD**

(30) Priority: 27.02.2020 US 202062982382 P
(71) Applicant: Montel Inc., Montmagny, Québec G5V 3S5 (CA)
(72) Inventor: BÉLANGER, Yves, Berthier-sur-Mer, Québec G0R 1E0 (CA)
(74) Representative: Hautier IP

(57) **Abstract**

The combined grow rack and ventilation system for plants comprises one or more grow racks that each define local aerated cells each corresponding to one shelf of the grow racks, for the plants to grow therein. A grow rack ventilation system is provided that includes a cell gas supply duct at each the aerated cell, with an inlet for connexion to a gas supply and an outlet, to supply gas to the aerated cell. The ventilation system also includes a cell gas evacuation duct at each the aerated cell, with an inlet disposed near the aerated cell for evacuating gas from the aerated cell, and a discharge outlet. The system also includes a positive pressure device providing positive pressure in each the cell gas supply duct, and a negative pressure device providing negative pressure in each the cell gas evacuation duct. Local forced gas flows are formed distinctly at each the aerated cells for both supplying and evacuating gas locally at each the aerated cell.

## Description

### CROSS REFERENCE DATA

This patent application is claiming Paris convention priority based upon co-pending United States provisional patent application No 62/982,382 filed 27 February 2020.

### BACKGROUND OF THE INVENTION

Vertical farming consists of growing plants in vertically spaced and superimposed levels, and usually incorporates controlled environment agriculture for optimizing growth. Such controlled environment includes natural (from the sun) or artificial lighting (e.g. LEDs) source, mineral nutrient (e.g. nitrogen N or iron Fe) feed, atmospheric air circulated elements including molecular oxygen O₂ and carbon dioxide CO₂ feed, atmospheric moisture level H₂O, and suitable ambient temperature levels. Vertical farming is usually installed in indoor enclosed environments such as greenhouses or fenestrated warehouses, with or without additional artificial lighting.

Plants grow thanks to photosynthesis, which is a process performed in chlorophyll pigments inside plant leaves that convert light energy into chemical energy for sustaining plants' life. This chemical energy is stored in the form of sugars, being synthesized from CO₂ and H₂O, wherein molecular oxygen O₂ is released by the plant as a waste product.

Plant transpiration corresponds to plant evaporation mainly from leaves and flowers through stomata apertures. Stomata pores can be closed or opened during diffusion of CO₂ from atmospheric air for photosynthesis. Transpiration is also necessary to enable mineral nutrients and H₂0 flow from roots along vascular plant xylem channel network to the aerial leaves and flowers.

Plant respiration is also a function of this opening of the stomata apertures that allow the diffusion of CO₂ gas from atmospheric air into the plant for photosynthesis.

One drawback of prior art indoor vertical farming technology is that plant growth is uneven in the context of densely packed plants networks , where plants at the radially outward edges of the plant network will typically grow faster than those plants that are radially inward the dense pack of plants. One reason for this is inefficient atmospheric air ventilation throughout the plants network, since those plants at the peripheral edge thereof will get more ventilation than those that are concealed or difficult to reach radially inwardly inside the dense pack of plants. Proper plant ventilation is paramount for optimizing plant transpiration and respiration and consequently, plant growth.

Prior art vertical farming plant ventilation systems provide global plant ventilation, i.e. only pushes air flows towards packs of plants on shelves, so that uneven plant ventilation is obtained and consequently, uneven plant growth.

### SUMMARY OF THE INVENTION

The invention relates to a combined grow rack and ventilation system for plants comprising:
- at least a first grow rack comprising:
   ∘ a frame;
   ∘ at least two vertically spaced and superimposed shelves carried by said frame, for carrying a number of potted plants; and
   ∘ a local aerated cell corresponding to each said shelf for the plants to grow therein;
- a grow rack ventilation system comprising:
   ∘ a cell gas supply duct at each said aerated cell, said cell gas supply duct defining a gas inlet for connexion to a gas supply, and a gas outlet disposed near said aerated cell for supplying gas to said aerated cell;
   ∘ a cell gas evacuation duct at each said aerated cell, said cell gas evacuation duct defining a gas inlet disposed near said aerated cell for evacuating gas from said aerated cell, and an outlet for connexion to a gas discharge;
   ∘ a positive pressure device providing positive pressure in each said cell gas supply duct; and
   ∘ a negative pressure device providing negative pressure in each said cell gas evacuation duct;
wherein local forced gas flows are formed distinctly at each said aerated cells for both supplying and evacuating gas locally at each said aerated cell.

In one embodiment, said aerated cells each define a longitudinal direction for disposing plants there along, with said air outlets of said cell gas supply ducts and said air inlets of said cell gas evacuation ducts extending lengthwisely along said londitudinal direction for locally aerating the plants along the longitudinal direction.

In one embodiment, the combined grow rack and ventilation system for plants further comprises:
- at least a second grow rack comprising:
   ∘ a frame;
   ∘ at least two vertically spaced and superimposed shelves carried by said frame, for supporting a number of potted plants; and
   ∘ a local aerated cell corresponding to each said shelf for the plants to grow therein;
   and
a grow rack locomotion device that allows said second grow rack to be movable relative to said first grow rack.

In one embodiment, said inlets of said cell gas supply dusts and said outlets of said cell gas evacuation ducts are positioned in such a way relative to one another that said local forced gas flows form a loop within said local aerated cells.

In one embodiment, said positive pressure device and said negative pressure device both include fans.

In one embodiment, the combined grow rack and ventilation system for plants further includes lighting units mounted to said grow rack and extending within each said aerated cell for illuminating the plants therein, said lighting units disposed near said gas outlets of said cell gas evacuation ducts for concurrently evacuating heat generated by the lighting units when gas is evacuated from said aerated cells.

In one embodiment, the combined grow rack and ventilation system for plants further includes an environment command and control unit operatively connected to at least one of said positive and negative pressure devices for controlling said local forced gas flows in said aerated cells.

In one embodiment, said environment command and control unit comprises at least one of a CO₂ gas source and a gaseous H₂O gas source is connected to said cell gas supply duct, wherein elemental gaseous fractional component optimization of CO₂, O₂ and H₂O in said local cell pathways is allowed.

In one embodiment, said environment command and control unit further comprises a CPU for controlling at least one of the positive and negative pressure devices, CO₂ concentration, H₂O concentration and temperature of the gas supplied in said cell gas supply ducts.

In one embodiment, grow rack ventilation system comprises a ventilation duct at each said aerated cell, said ventilation duct comprising two cell gas supply ducts and one cell gas evacuation duct forming a unit.

The present invention also relates to a method of aerating plants within a combined grow rack and ventilation system for plants as defined in claim 1, comprising:
- generating positive gas pressure within said cell gas supply ducts;
- enabling gas to be supplied locally to each said aerated cell from said cell gas supply ducts through said gas outlets of said cell gas supply ducts;
- generating negative air pressure within said cell gas evacuation ducts; and
enabling gas to be evacuated locally at each aerated cell through said gas inlets of said cell gas evacuation ducts into said cell gas evacuation ducts.

In one embodiment, the method of aerating plants further comprises orienting the gas supplied to each said aerated cell the gas evacuated from each aerated cell such that a looping gas flow is formed at each local aerated cell.

The present invention further relates to a method of locally controlling the climate in a plant grow rack system comprising at least one rack having superimposed shelves each for supporting a number of potted plants, and defining local growing cells corresponding to the said shelves wherein plants grow above or below said shelves, the method comprising:
- monitoring climate parameters selected from at least one of the group comprising: temperature, moisture level, CO₂ level and O₂ level at each said local growing cells;
- supplying air locally to each said growing cell; and
- locally and distinctly adjusting the air supplied at each growing cell in correlation with the climate monitored parameters to optimize the climate parameters for optimal plant growth at each growing cell.

In one embodiment, the step of adjusting the air supply in correlation with the climate monitored parameters comprises one of injecting C0₂, injecting gaseous H₂O, heating and cooling the air supply.

In one embodiment, the method of locally controlling the climate in a plant grow rack system further comprises the step of locally and distinctly evacuating air at each said growing cell.

### BRIEF DESCRIPTION OF THE DRAWINGS

In the annexed drawings:
Figure 1 is a partial perspective view of one embodiment of grow rack system for plants comprising a ventilation system according to the present invention, with arrows suggesting air flow directions through ventilation ducts, and also showing ground rail tracks for horizontal sliding motion of the four illustrated grow rack frames, each rack frame supporting three vertically stacked layers of shelves;
Figure 2 is an enlarged view of the left-hand side grow rack frame and ground track rails of the system of figure 1, with ventilation supply being shown schematically by arrows in a pair of laterally spaced vertical air supply ducts and ventilation evacuation, by a further arrow in a vertical plant gas waste product evacuation duct opposite the air supply ducts;
Figure 3 is a side elevation of the grow rack frame of figure 2, further schematically showing the connexion of the two main push/pull plant waste product gas/air supply/evacuation ducts to the room's central ventilation system, and the CPU unit that controls the ventilation of the grow rack system;
Figure 4 is an enlarged end perspective view of three side-by-side grow racks of the grow rack and ventilation system of figure 1;
Figure 5 is an enlarged top perspective view of one grow rack ventilation duct connected to two opposite air supply ducts and one gas evacuation duct, both shown only in part, of the grow rack system of the invention;
Figure 6 is an end elevation at a larger scale of the ventilation duct of figure 5, suggesting the looping air flow pathways between the air supply ducts and the plant gas evacuation duct, further showing an underlying lighting unit;
Figure 7 is an enlarged view of the area circumscribed by line VII of figure 5, with part of the ventilation ducts walls being cut away for clarity of the view;
Figure 8 is an end elevation of the grow rack of figure 2, additionally shown with potted plants standing on shelves of all three vertically spaced shelve units;
Figure 9 is an end elevation similar to figure 8 of a grow rack system, but instead according to the prior art, comprising no local air ventilation system on the shelves; and
Figure 10 is a schematic view of the CPU enabled localized climate control network about the localized cell areas of the plant shelves.

### DETAILED DESCRIPTION OF THE EMBODIMENTS

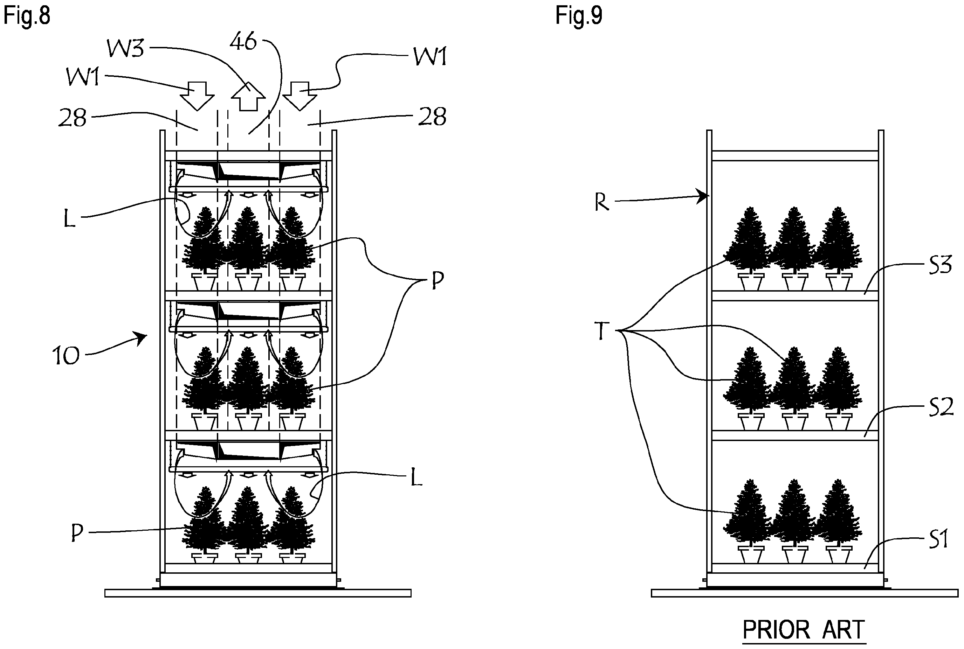

Figure 9 shows a plant vertical grow rack according to prior art systems wherein potted plants P are installed on three vertically spaced superimposed shelves S1, S2 and S3 of a self-standing rack R.

As suggested in the background of the invention section of the present specification, one problem with this type of prior art arrangement relates to the fact that the plants themselves are tightly packed: they are lined up on their respective shelves S1, S2, and S3; these shelves are stacked in vertically spaced fashion on the rack R, and numerous such racks R, R, ... can be installed side-by-side. This is challenging to allow both optimization of the plant growth area, i.e. allowing numerous plants per unit of volume in the plant growth area, and suitable plant growth, for two reasons. Firstly, by providing a suitable overhanding light source to each plant, such light source needs to be disposed under the overlying shelf of the rack R, near the plants and this submits the plants to heating loads that are uneven i.e. decrease from top to bottom along the plants' aerial parts height, which can then consequently dehydrate and/or this can increase plant transpiration with evaporating water beyond operational parameters values. Also and importantly, the plants require fresh air, i.e. air comprising carbon dioxide in appropriate concentration, to optimally photosynthesize. If several potted plants units are physically packed in a concentrated volume into a tight space - which is desirable to optimize the growth area floor space and vertical height, i.e. to make the most of available indoor room - then the plants themselves will reduce the carbon dioxide concentration by creating oxygen without proper air circulation, and this compromises their growth capacity. Indeed, a self-harming negative loop feedback is achieved whereby the peripheral plants from the pack of plants excrete excess O₂ in the immediate surrounding air volume thus altering and compromising the delicate O₂ and CO₂ equilibrium of interior plants radially inwardly of the peripheral plants that would be necessary for optimal plant growth thereof.

Access to fresh air, and also ideally avoiding overheating, the aerial part of the plants to avoid plant dehydration and having to use more water is consequently desirable.

Herein, references to "air" or "gas" are both used, referring to a possibly variable and possibly adjusted mix of O₂, CO₂, moisture, inert gases and other gases that may naturally compose ambient air or that might be added through voluntary or involuntary injection into the composition.

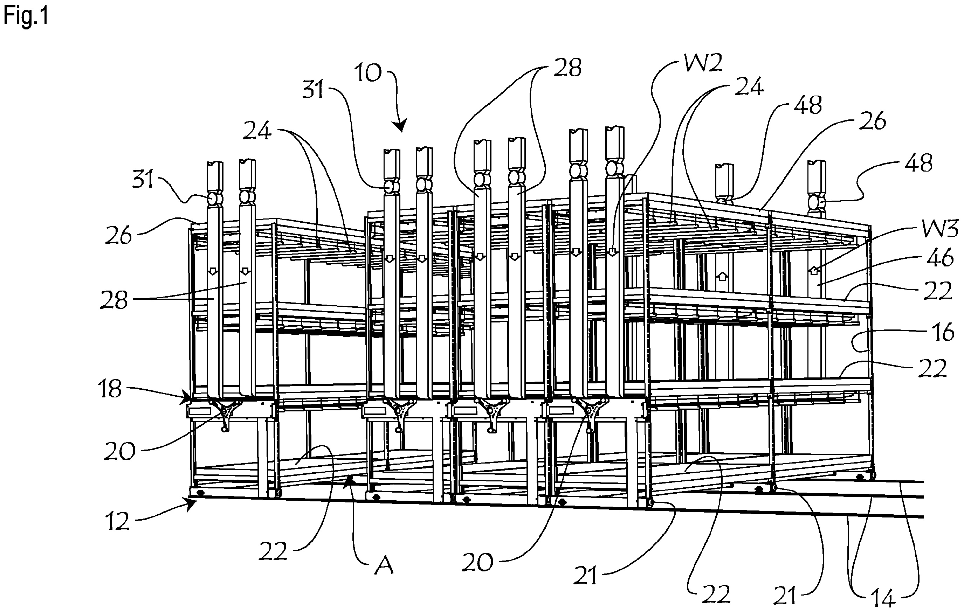

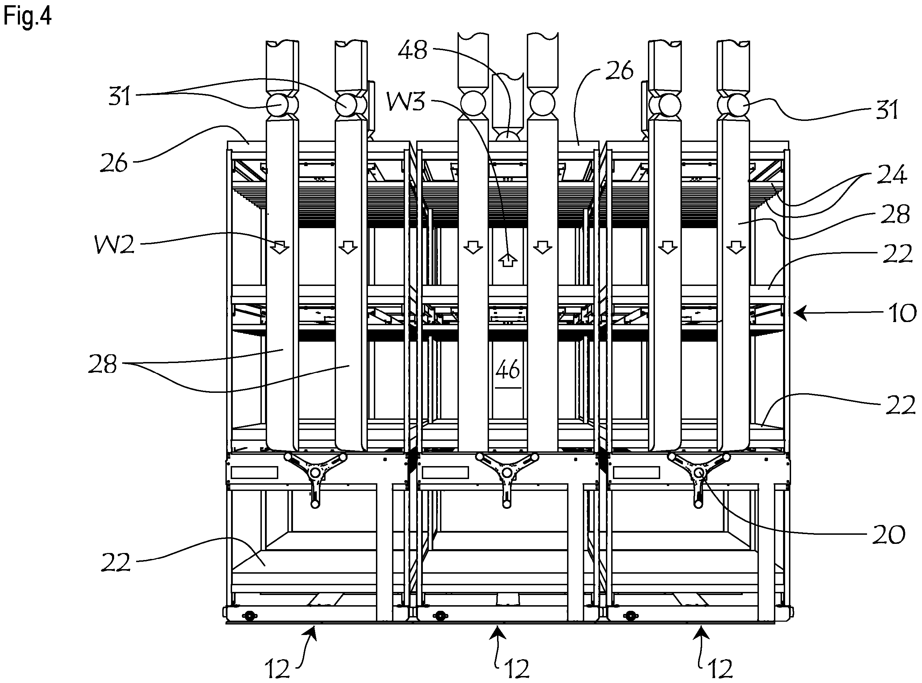

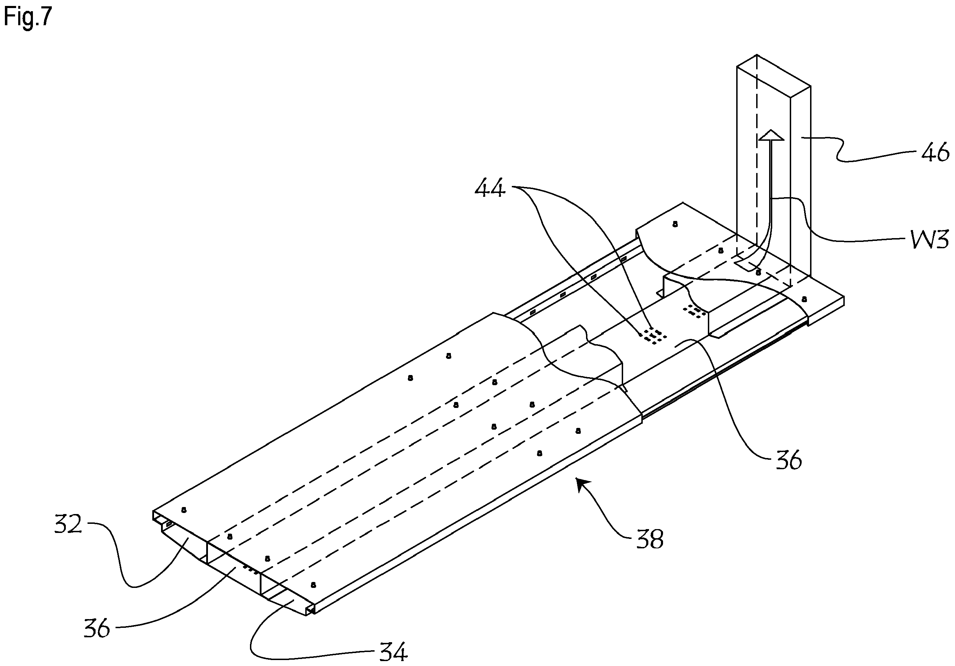

Figures 1-8 show a mobile grow rack system 10 for plants P with a ventilation system 26 according to an embodiment of the present invention.

Grow rack system 10 comprises a number of mobile vertical grow racks 12 movable over ground on ground track rails 14. Each vertical grow rack 12 comprises a frame 16 that is movable along rails 14 by means of carriage wheels 21. A locomotion mechanism 18 is provided on frame 16. In the example shown in the drawings, locomotion system 18 comprises a handlebar 20 mounted to each rack 12 and mechanically linked to drive wheels 21 that engage rails 14 such that when handlebar 20 is rotated, the corresponding vertical grow rack 12 will be forced to move slidingly horizontally along ground track rails 14. If and when this upright grow rack 12 abuts another adjacent upright grow rack 12, this adjacent grow rack 12 will also be forced to slide horizontally therewith along ground track rails 14. Two or more grow racks 12 may consequently be moved simultaneously by rotating a single handlebar 20, as known in the art. A free alley A (figure 1) can be formed in the gap between two consecutive vertical grow racks 12 slidingly spaced from one another along the ground track rails 14, to access the superimposed shelves 22 of the racks 12 that are adjacent to alley A. The number and size of the grow racks relative to the length of the ground track rails 14 are such that alley A is wide enough to allow free standing of and walk-through passage by a user person, for easy access to all the potted plants on the shelves 22 of the racks on either sides of the alley A. All grow racks 12 can be movable on tracks 14, or alternately all grow racks 12 except the two located at opposite extremities of the track 14 that are fixed.

It is understood that other locomotion systems could alternately be used. For example, vertical grow racks 12 could alternately be moved through electric/electronic locomotion devices, e.g. through the intervention of a user person using a control panel (not shown) which can be provided on each rack 12 and/or that can be a wireless handheld device, including a smartphone equipped with a suitable software; these control panels allowing the user person to issue commands through the software interface to the automated grow rack system 12 to move the vertical grow racks horizontally over track rails 14 as desired. The controls panels can be connected to a CPU, which can be the same CPU 72 as that used to control the ventilation of grow racks system 10 (see below) or a distinct CPU, to control the displacement of grow racks 12.

In one embodiment, such grow rack system 12 includes proactive security systems (not shown) that prevent the vertical grow racks 12 from moving if a user or object is detected in an alley to avoid accidentally crushing a bystander.

In another embodiment, the pots of the potted plants P are replaced by a soil-less mineral nutrient feed growth system (not shown) wherein the plants are grown, e.g. plants with aeroponics feed process, hydroponics, aquaponics, or others.

Grow rack system 12 includes a number, i.e. two or more, superimposed shelves 22, 22; e.g. three superimposed shelves 22, 22, 22 as shown in the drawings, each defining a corresponding horizontal plant growth area for plants P above the shelf 22 herein referred to as "a cell".

Grow rack system 10 is used to store and grow potted plants P on shelves 22. It is understood that, although plants P are shown to lie atop a shelf 22, according to the present invention, plants P could be otherwise suitably supported by, affixed to, or hanging from, a shelf 22.

Overhanging above the plants P are a number of light units 24 to which is supplied electric power such as 110 Volts AC or 220 Volts AC, to provide the required electrical power to lighting units 24. Lighting units 24 are shown schematically in the drawings, and may include ballasts that conventionally limit the amount of current from supply line voltage, while maintaining the necessary electrical conditions for on/off operations, as is known in the art. Lighting units 24 may comprise high efficiency, very low-heat emitting LED lights 24, or any other type of lighting units as will be obvious to a person skilled in the art of indoor farming, including some lights that are heat-emitting. For instance, the lighting units 24 may include e.g. fluorescent tubes, incandescent bulbs, gas discharge lamps such as a sodium vapor lamps, and the like. Lightning units 24 from each shelf 22 are preferably designed to emit light directed towards the plants P supported on same corresponding shelf 22, although obviously the light may - and usually will - diffuse towards other plants on nearby shelves of the grow rack system 10.

Lighting units 24 hang above plants from the overlying shelf 22 via vertical hook members 25, or from the top platform 26 for plants located on the uppermost shelf 22. Lighting units 24 are controlled to provide the required lighting to plants P to allow them to grow optimally. In one embodiment, the grow plant area defined at each shelf 22 includes independently controlled light units 24.

According to the present invention, there is provided a grow rack ventilation system 26 that is preferably destined to be connected to an appropriate central ventilation system 30, e.g. a room's central ventilation system 30; although the grow rack ventilation system could alternately be autonomous (not shown).

Central ventilation system 30 includes an air supply fan 62 for supplying air through an air supply outlet 28a and an air evacuation fan 60 for recuperating air through an air evacuation inlet 46a. Air recuperated within the room through air evacuation inlet 46a can be suitably discharged such as exhausted outside of the room including outside of the building, or can be filtered, treated and recirculated for being reused inside the room. Air injected through air supply inlet 28a can be new air taken from outside the room including outside the building, or may be air recirculated from the room, which may be suitably treated to adjust the air composition to desired air parameters.

Grow rack ventilation system 26 comprises first air supply ducts 28 that are connected to air supply inlet 28a of central ventilation system 30. Auxiliary supply fans 31 may optionally be provided on some or each supply duct 28 to aid in pushing air through ducts 28. First air supply ducts 28 have a portion that runs vertically down along each rack 12.

Ventilation system 26 also comprises an elongated ventilation duct assembly 38 that extends over and along the length of each shelf 22 of grow rack 12 and that comprises two spaced-apart air supply cell gas/air supply ducts 32, 34 between which a plant waste gas/air evacuation duct 36 is disposed. Cell air supply ducts 32, 34 are not in direct fluid communication with adjacent cell air evacuation duct 36. Two first air supply ducts 28 are respectively connected to cell air supply ducts 32, 34. Cell air supply ducts 32, 34 and cell gas evacuation duct 36 form a unitary cell ventilation duct assembly 38 for practical purposes, but could alternately be formed separately.

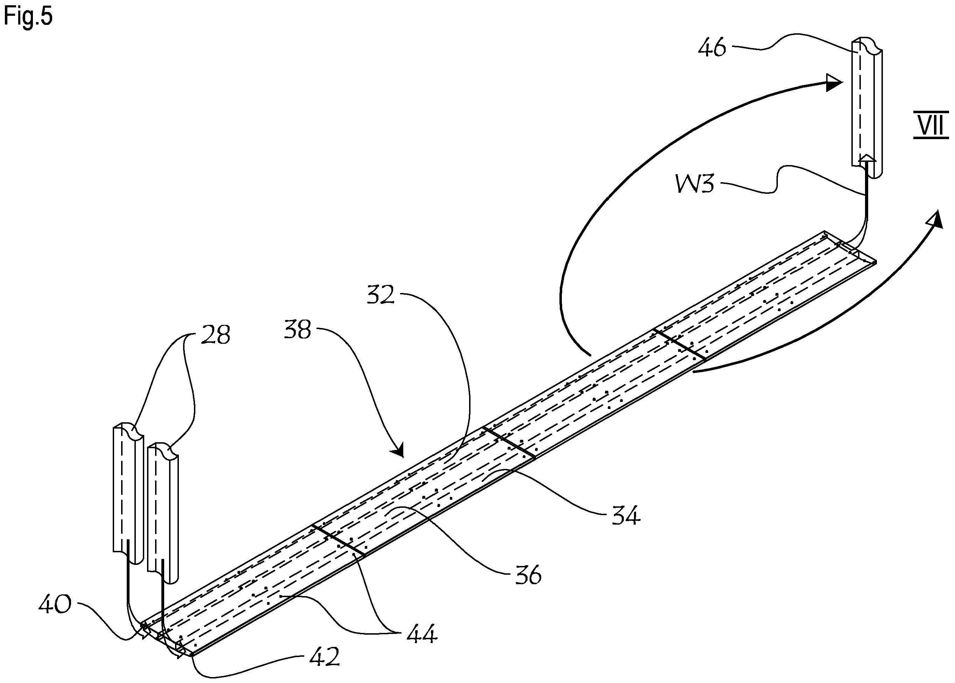

Ventilation duct assembly 38 is shown in greater detail in figures 5-7. Cell air supply ducts 32, 34 are each in the form of a plenum that comprises a number of respective outlet openings 40, 42 that are oriented downwardly and that are disposed longitudinally along the outer sides of ventilation duct assembly 38. Cell gas evacuation duct 36 comprises a plurality of inlet openings 44 that are disposed centrally, spacedly between the two opposite lengthwise ends of cell ventilation duct 38 and transversely between the outlet openings 40, 42. The shape, size and configuration of air outlet openings 40, 42 and of air inlet openings 44 can be determined and adjusted according to desired air inflow/outtake.

Cell ventilation duct assembly 38 is installed above light units 24, spacedly above each shelf 22, being attached to the overlying shelf 22 or to the top platform 26 in the case of the uppermost shelf 22, such that there is enough space between each shelf 22 and the overlying corresponding lighting unit 24 and ventilation duct assembly 38 for plants P to be supported and to grow.

Second vertical air evacuation ducts 46 are endwisely connected to cell air evacuation ducts 36 of the respective cell ventilation ducts 38 and, aided by optional auxiliary evacuation fans 48, allow evacuation of plant respiration gaseous waste products towards evacuation outlet 46a of central ventilation system 30.

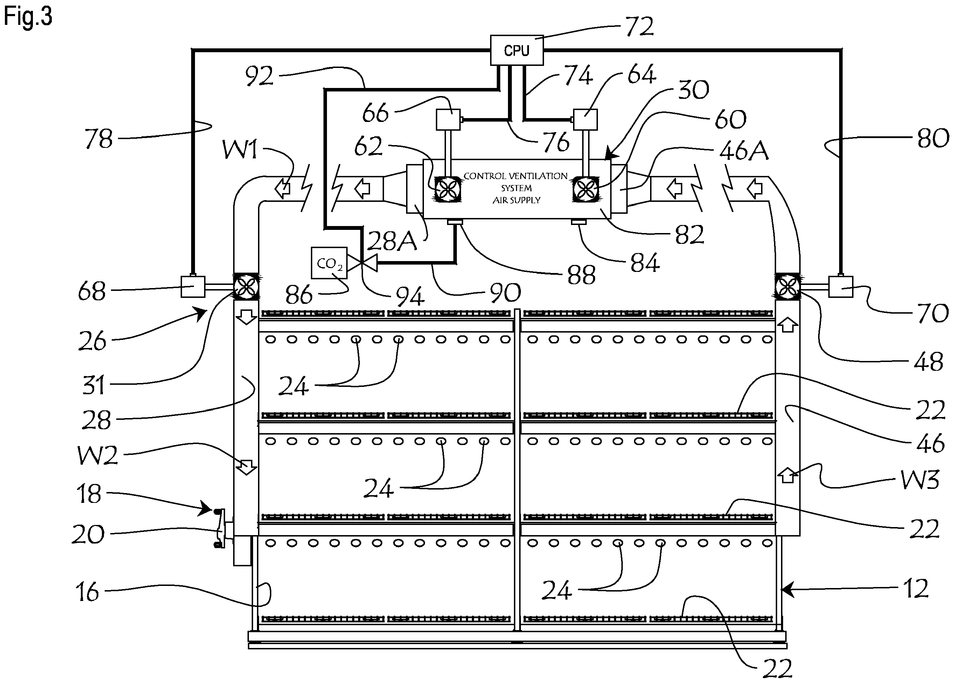

In use, as shown particularly in figs 3 and 5-7, air is fed from central ventilation system 30 through inlets 28A and into first air supply ducts 28, which may include a first horizontal air flow W1 and then a coextensive second vertical air flow W2 through an elbowed portion of first air ducts 28. Auxiliary motorized fan 31 enhance fluid flow motion from central ventilation system main air push fan 62, since the latter may not be efficient enough to distribute air through the supply ducts 28 of the grow rack system 10. Downward air flow W2 bifurcates into the horizontal plenum cell supply air ducts 32 and 34, wherein positive air pressure created by fans 62, 31 blows air downwardly out through duct outlet openings 40, 42 into the localized cells located at and above each shelf 22. Thereafter, plant respiration by-products are sucked up through multiple gas inlet openings 44 made in lengthwisely spaced fashion along the horizontally extending gas evacuation ducts 36. Evacuated gas flow W3 then escapes vertically through vertical second gas evacuation ducts 46, and out through evacuation outlet 46a from where it will likely be exhausted outside of the room and the building.

In one embodiment, the elemental composition of the air being supplied to each shelf 22 can be adjusted as needed, notably to have the desired concentration of carbon dioxide CO₂, through control unit 72 acting on a valve 94 of CO₂ feed source 86. Also, a desired temperature, humidity level, and other gas parameters may be adjusted as detailed below.

This results in air being circulated into the area below each ventilation duct 38, approximately as shown in the figures 1-8. Namely, the air circulated through the multiple plants network area will envelop the cells that represent the aerial part of the plants P by being fed on their two opposite sides simultaneously; and, importantly, it will be recuperated through the center of the cells carrying with it not only the gaseous plant by-products, but also some heat generated by the light units 24 if the latter is of heat generating type such as incandescent bulbs. This has multiple effects: the plants P are fed with fresh air with controlled parameters, including containing carbon dioxide in suitable concentration for optimal growth conditions; used air containing more oxygen and less carbon dioxide is evacuated; and the heat generated by light units 24 is partly evacuated with the used air since the air flow loops centrally up and between the lighting units 24, thus minimizing excess plant transpiration.

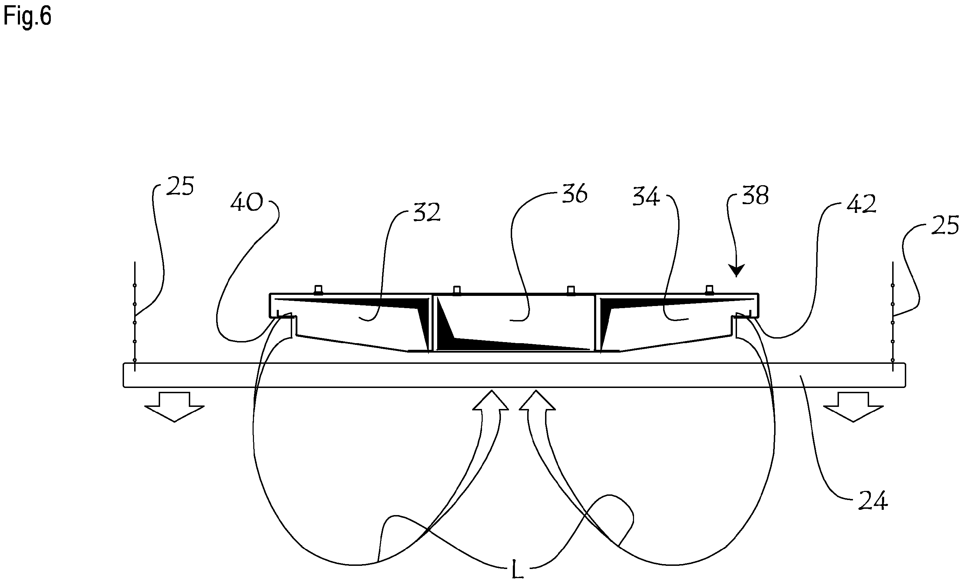

The resultant air forms a pair of air flow pathways that each start exteriorly from each shelf plant growth area from respective outer air outlet openings 40 and 42 of plenum channels 32, 34 and that are oriented downwardly inwardly into the plant area, and that converge centrally in the plant area where it is sucked upwardly and into the air inlet openings 44 of evacuation duct 36. In one embodiment, these air flow pathways form looping air flows shown in figures 6 and 8 by arrows L depicted therein.

As noted above, the looping air flows L allow fresh air to be fed into the aerial parts of the multiple plants network area, in local cells at each shelf 22, and to fill the aerial multiple plants area. Since each shelf 22 is aerated in such a way simultaneously and independently, fresh air is supplied and plant transpiration waste products are evacuated from each of the thusly aerated cells, together with some of the heat generated by the lighting units 24; and each of those aerial plant areas, or cells, may be controlled independently. This optimizes plant growth by feeding them with fresh air including carbon dioxide and by reducing the dehydration (excess transpiration) thereof. Such a ventilation system 26 for plants P is highly desirable in indoor farming where the multiple plants growth area is packed at high density. Use of a mobile grow rack system 10 wherein the racks 12 can be laterally stacked against one another to optimize the floor space of the growth area; and wherein each rack 12 can have several vertically spacedly disposed shelves 22 to optimize the height of the plant growth area also, allows an efficient use of the volume within a room, and the combination thereof with a ventilation system 26 of the invention allows this optimal use of space without that being at the cost of growth efficiency. This allows high output plant production in the indoor growth area.

It is noted that by injecting air laterally downwardly along the side edges of the shelves 22 through the plenum channels 32, 34, air flow from side-by-side adjacent vertical grow racks 12 will merge and will be circulated in parallel, facilitating the formation of the downward branches of the looping air flows L.

The grow rack and ventilation system 10 of the present invention provides fresh air and adjustable levels of elemental CO₂/O₂/H₂O gaseous components into a growth area, i.e. in specific local cells , to aerate the aerial parts of potted plants P supported by shelves 22, as opposed to non-specific global aeration of a room full of densely packed plants that self-compromise growth by not evacuating fast enough plant respiration gaseous waste products.

Also, by both injecting fresh air and recuperating under negative pressure loads plant respiration waste products simultaneously, and by controlling the respective injection and recuperation air/gas flow rates, locally at each shelf 22, the local cell gaseous volume in the aerated shelves 22 is controlled, which includes controlling air pressure, air/gas temperature, humidity and concentration in air composition (including concentration in carbon dioxide CO₂). Monitoring sensors (see below) including air flow rate, temperature, pressure and humidity measuring sensors can be used, and can be linked to a central control CPU device 72. In turn, the CPU can automatically, or through the manual intervention of a user, control the air flow rate supplied to and gaseous plant waste products recuperated from shelves 22, and also other parameters such as temperature and moisture levels.

In one embodiment, CPU 72 provides uniform plant growth parameters levels in each cell defined as a plant growth area spanning one of more shelf 22. In another embodiment, a CPU is provided distinctly and individually at each controlled plant growth cell, for individually controlling parameter levels in each cell. In any event, this allows individual control of the plant growth parameters at each cell, which means essentially locally controlling of the climate therein, allowing for example to provide cooler air at the top shelves where temperature levels would otherwise be likely to be higher, thus providing a thermal sink stabilizer; and to provide air with greater concentrations of CO₂ in the more densely packed areas of the grow rack system 10. This also means that depending on the plants located at each shelf 22, and their growth level relative to other plants in the growth area, different local climates could be produced at each shelf 22 to calibrate the air pressure, temperature and carbon dioxide concentration for each shelf 22, and these local climates may be adjusted over time to compensate measured or observed plant growth.

It is noted that further distinct cells could be formed along each horizontal shelf 22, to allow local climate control along any of the X, Y and Z axes.

According to one embodiment, the local climate along each horizontal layer of shelves 22 can be controlled through mechanical means such as by controlling the outlet openings 40, 42 and of inlet openings 44 with flaps (not shown) that can control the opening of outlets 40, 42 and of inlet openings 44. These flaps would be segmented and positioned at corresponding discrete segments of shelves 22, to allow each of those segments to control the air flow supplied to that segment of shelf 22 and the air flow recuperated from that segment of shelf 22. Alternately, the fans 62, 60, 31 and 48 can be controlled to adjust and calibrate the air supply/evacuation.

A water supply system (see below), e.g. water pipes and sprinklers, can optionally be installed on each shelf 22, to improve moisture levels. This allows water to be supplied to the plants. The water sprinkler system can be controlled through a same CPU 72 that centralizes management of element gaseous components of the air and water supply to the plants.

Other devices for plantations to flourish may also be provided, as will be obvious to a person skilled in the art.

In one embodiment (not shown), the grow rack ventilation system 26 is autonomous and is not linked to a central ventilation system 30. In such a case, the fans 31, 48 become necessary, or any other device capable of creating positive pressure in cell gas supply ducts 32, 34 and negative pressure in gas evacuation ducts 36. Alternately, if connected to a central ventilation system 30 with sufficient CFM power, the auxiliary fans 31, 48 perhaps become unnecessary. It is understood that the positive/negative pressures in ducts 32, 34 and 36 is what generates the desired local air circulation at each cell, and this may be achieved with any suitable positive/negative pressure devices including fans 62, 31, 48, 60.

As shown in figure 3, fan drive motors 64 and 66 are operatively connected to fans 60 and 62 respectively, while fan drive motors 68 and 70 and operatively connected to fans 31 and 48 respectively. CPU unit 72 is operatively connected to fan drive motors 64, 66, 68, 70 either wirelessly or by suitable control wires 74, 76, 78 and 80, respectively. Fans with suitable air flow capacity (CFM) will be selected as will be obvious to a person skilled in the art.

An atmospheric air intake port 84 allows fresh ait to be supplied to central ventilation system 30. In one embodiment, a CO₂ source 86 is coupled to housing 82 through CO₂ feed line 90 and through housing intake port 88. In one embodiment, CO₂ source 86 includes a valve assembly 94 operatively connected to control CPU 72 by control line 92, so that variable CO₂ supply from CO₂ source 86 through line 90 and housing access port 88 into housing 82 is achieved.

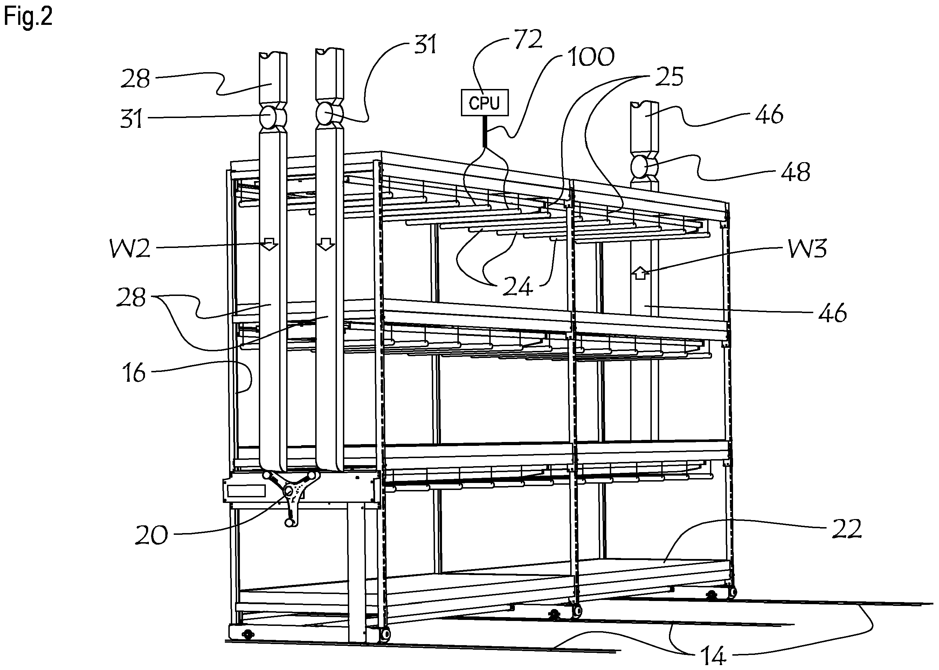

In one embodiment illustrated in figure 2, the control CPU 72 is operatively connected to the lighting units 24 by control lines 100 for on/off control and/or dimming such that light emission from lighting units 24 may be controlled by CPU 72, thus providing desirable variable levels of illumination to the underlying plants on the shelves 22.

In one embodiment, a single control logic CPU 72 is provided for all grow racks 12, movable relative to one another along ground tracks 14. Wireless connexion or telescopic accordion-like tubular wire connectors (not illustrated) interconnect CPU 72 with all components of the various mobile racks 12.

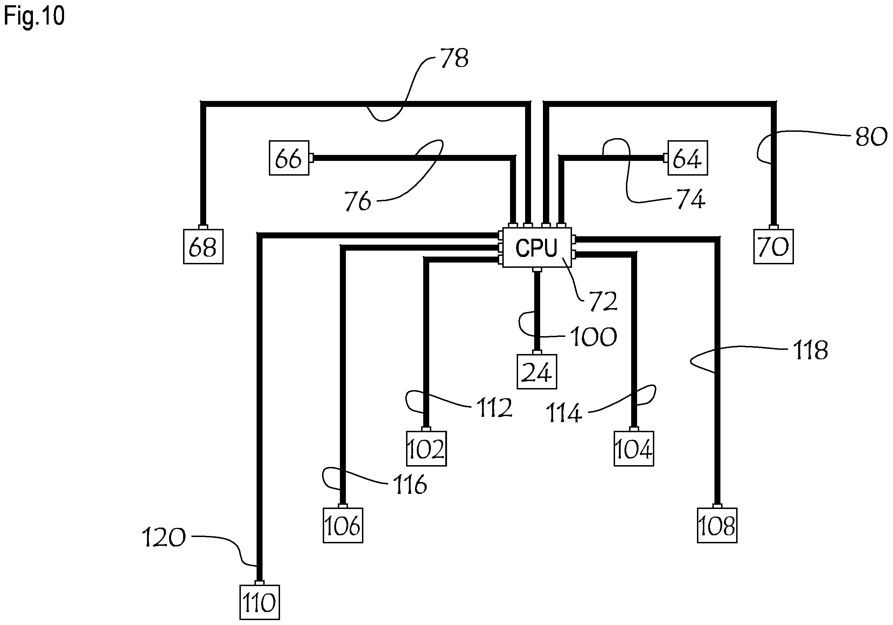

In one embodiment there is provided a method of climate control individually suited for each localized climate control cell on the rack shelves, with the system schematically illustrated in figure 10. Climate control parameters are independently and individually monitored by local shelf sensors in each of said climate control cells, such as sensors for CO₂, O₂, temperature and moisture levels, and controlled remotely by CPU 72. Sensors may include temperature sensors 102, lighting sensors 104, moisture sensors 106, CO₂ sensors 108 and O₂ sensors 110. These sensors 102-110 are operatively connected by CPU unit 72 wirelessly or by control lines 112, 114, 116, 118 and 120 respectively. CPU unit 72 will provide real time command and control to fan motors 64, 66, 68 and 70, and on CO₂ injection valve 94, based upon climate sensor values monitored in real time from sensors 102-110 so that climate parameters are continuously optimized for plant growth.

## Claims

1. A combined grow rack and ventilation system for plants comprising:
• at least a first grow rack comprising:
∘ a frame;
∘ at least two vertically spaced and superimposed shelves carried by said frame, for carrying a number of potted plants; and
∘ a local aerated cell corresponding to each said shelf for the plants to grow therein;
• a grow rack ventilation system comprising:
∘ a cell gas supply duct at each said aerated cell, said cell gas supply duct defining a gas inlet for connexion to a gas supply, and a gas outlet disposed near said aerated cell for supplying gas to said aerated cell;
∘ a cell gas evacuation duct at each said aerated cell, said cell gas evacuation duct defining a gas inlet disposed near said aerated cell for evacuating gas from said aerated cell, and an outlet for connexion to a gas discharge;
∘ a positive pressure device providing positive pressure in each said cell gas supply duct; and
∘ a negative pressure device providing negative pressure in each said cell gas evacuation duct;
wherein local forced gas flows are formed distinctly at each said aerated cells for both supplying and evacuating gas locally at each said aerated cell.

2. The combined grow rack and ventilation system for plants as defined in claim 1, wherein said aerated cells each define a longitudinal direction for disposing plants there along, with said air outlets of said cell gas supply ducts and said air inlets of said cell gas evacuation ducts extending lengthwisely along said londitudinal direction for locally aerating the plants along the longitudinal direction.

3. The combined grow rack and ventilation system for plants as defined in claim 1, further comprising:
• at least a second grow rack comprising:
∘ a frame;
∘ at least two vertically spaced and superimposed shelves carried by said frame, for supporting a number of potted plants; and
∘ a local aerated cell corresponding to each said shelf for the plants to grow therein;
and
• a grow rack locomotion device that allows said second grow rack to be movable relative to said first grow rack.

4. The combined grow rack and ventilation system for plants as defined in claim 1, wherein said inlets of said cell gas supply dusts and said outlets of said cell gas evacuation ducts are positioned in such a way relative to one another that said local forced gas flows form a loop within said local aerated cells.

5. The combined grow rack and ventilation system for plants as defined in claim 1, wherein said positive pressure device and said negative pressure device both include fans.

6. The combined grow rack and ventilation system for plants as defined in claim 1, further including lighting units mounted to said grow rack and extending within each said aerated cell for illuminating the plants therein, said lighting units disposed near said gas outlets of said cell gas evacuation ducts for concurrently evacuating heat generated by the lighting units when gas is evacuated from said aerated cells.

7. The combined grow rack and ventilation system for plants as defined in claim 1, further including an environment command and control unit operatively connected to at least one of said positive and negative pressure devices for controlling said local forced gas flows in said aerated cells.

8. The combined grow rack and ventilation system for plants as defined in claim 7, wherein said environment command and control unit comprises at least one of a CO₂ gas source and a gaseous H₂O gas source is connected to said cell gas supply duct, wherein elemental gaseous fractional component optimization of CO₂, O₂ and H₂O in said local cell pathways is allowed.

9. The combined grow rack and ventilation system for plants as defined in claim 8, wherein said environment command and control unit further comprises a CPU for controlling at least one of the positive and negative pressure devices, CO₂ concentration, H₂O concentration and temperature of the gas supplied in said cell gas supply ducts.

10. The combined grow rack and ventilation system for plants as defined in claim 1, wherein grow rack ventilation system comprises a ventilation duct at each said aerated cell, said ventilation duct comprising two cell gas supply ducts and one cell gas evacuation duct forming a unit.

11. A method of aerating plants within a combined grow rack and ventilation system for plants as defined in claim 1, comprising:
• generating positive gas pressure within said cell gas supply ducts;
• enabling gas to be supplied locally to each said aerated cell from said cell gas supply ducts through said gas outlets of said cell gas supply ducts;
• generating negative air pressure within said cell gas evacuation ducts; and
• enabling gas to be evacuated locally at each aerated cell through said gas inlets of said cell gas evacuation ducts into said cell gas evacuation ducts.

12. The method of aerating plants as defined in claim 11, further comprising orienting the gas supplied to each said aerated cell the gas evacuated from each aerated cell such that a looping gas flow is formed at each local aerated cell.

13. A method of locally controlling the climate in a plant grow rack system comprising at least one rack having superimposed shelves each for supporting a number of potted plants, and defining local growing cells corresponding to the said shelves wherein plants grow above or below said shelves, the method comprising:
• monitoring climate parameters selected from at least one of the group comprising: temperature, moisture level, CO₂ level and O₂ level at each said local growing cells;
• supplying air locally to each said growing cell; and
• locally and distinctly adjusting the air supplied at each growing cell in correlation with the climate monitored parameters to optimize the climate parameters for optimal plant growth at each growing cell.

14. The method of locally controlling the climate in a plant grow rack system as defined in claim 13, wherein the step of adjusting the air supply in correlation with the climate monitored parameters comprises one of injecting C02, injecting gaseous H2O, heating and cooling the air supply.

15. The method of locally controlling the climate in a plant grow rack system as defined in claim 13, further comprising the step of locally and distinctly evacuating air at each said growing cell.
